# EUROPÄISCHE PATENTANMELDUNG

(11) **EP 1 106 454 A2**
(43) Veröffentlichungstag der Anmeldung: **13.06.2001**
(21) Anmeldenummer: 00125380.6
(22) Anmeldetag: 01.12.2000
(51) Int. Cl.: B60S 1/04

(54) **Wischerblattentlastung eines Scheibenwischers für Kraftfahrzeuge**

(30) Priorität: 08.12.1999 DE 19959137
(71) Anmelder: Volkswagen Aktiengesellschaft, 38436 Wolfsburg (DE)
(72) Erfinder: Ackermann, Frank, 38154 Königslutter/Lauingen (DE)

(57) **Zusammenfassung**

Wischerblattentlastung für einen versetzt angeordneten oberen und unteren Scheibenwischer mit einem Rampenauflauf der Scheibenwischer, wobei an der dem oberen Scheibenwischer (3) zugewandten Seite des unteren Scheibenwischers (2) eine Rampe (5) angeordnet ist und der obere Scheibenwischer (3) auf dieser Rampe (5) in Parkstellung aufsitzt. Die Rampe (5) ist vorzugsweise am Spannstück (4) des unteren Scheibenwischers (2) angeordnet. Der Auflauf auf die Rampe (5) erfolgt mittels einer Gleitschiene (6) des oberen Scheibenwischers (3).

## Beschreibung

Die Erfindung betrifft eine Wischerblattentlastung eines Scheibenwischers für Kraftfahrzeuge in der Parkstellung, wobei der Scheibenwischer aus einem Wischerarm und einem daran befestigten Wischerblatt besteht. Das Wischerblatt besitzt ein Bügelsystem und einen Wischergummi. Durch das Bügelsystem und den Wischerarm wird der Wischergummi nachgiebig gegen die Glasscheibe gedrückt. Der Scheibenwischer ist in eine Parkstellung verfahrbar.

Flüssigkeiten, insbesondere Regenwasser, die auf Glasscheiben von Kraftfahrzeugen gelangen, werden durch motorisch angetriebene Scheibenwischer von der Glasscheibe entfernt. Um die Reinigungswirkung des Scheibenwischers zu gewährleisten, wird meist über ein Federsystem ein Anpreßdruck auf das Wischerblatt ausgeübt, welcher den Wischergummi mit seiner Lippe an die Glasscheibe andrückt. Dieser für die Flüssigkeitsentfernung notwendige Anpreßdruck wirkt nicht nur im Betrieb, sondern kontinuierlich also auch in der Parkstellung sowie auch, wenn das Kraftfahrzeug nicht benutzt wird. Die kontinuierliche Druckbelastung des Wischergummis ist insbesondere bei Witterungsunbilden nachteilig. Im Winter bei Kälte friert der Wischergummi mit seiner Dichtlippe an der Glasscheibe fest, im Sommer bei hohen Temperaturen klebt der Wischergummi an der Glasscheibe. Besonders im Winter bedarf es Aufwand, um den Scheibenwischer wieder funktionsfähig zu machen; beispielsweise mittels Benetzen der Glasscheibe mit Auftaumitteln. Wird dieser Aufwand nicht betrieben, so besteht die Gefahr, daß die Wischergummilippe abreißt bzw. beschädigt wird und damit die Lebensdauer des Wischergummis stark herabgesetzt ist.

Die aufgezeigten Nachteile werden in verschiedenerweise beseitigt. Die herkömmliche Methode, die Glasscheiben mittels Folien oder Planen abzudecken oder das Kippen der Scheibenwischer in die Reinigungsstellung, ist nur ein Notbehelf, da dies nur bei abgestelltem Fahrzeug möglich ist. Um zu einem schonenden Gebrauch der Scheibenwischer zu gelangen, wurden bereits Ausführungen bekannt, die den Wischergummi in Parkstellung abheben und zwar in der Weise, daß der Anpreßdruck des Scheibenwischers verringert oder aufgehoben wird.

Bekannt ist das Anheben und damit die Entlastung des gesamten Wischerarmes. Hierbei muß stets der Druck der Anpreßfeder des Wischerarmes überwunden werden.

In der EP 0812744 A1 wird eine Einrichtung zum Beabstanden eines Scheibenwischers von einer Scheibe beschrieben. Am Schwenkarm ist eine Fixiervorrichtung befestigt, an der ein Distanzhalter mit einer Scheibenkontaktfläche bewegbar angeordnet ist.

Zum Abheben des Wischerarmes wird der Distanzhalter gegenüber der Fixiervorrichtung um eine quer zum Schwenkarm gerichtete Drehachse so gedreht, daß die Scheibenkontaktfläche auf der Scheibe aufsitzt und der Abstand der Scheibenkontaktfläche von der Fixiervorrichtung maximal ist. Der Distanzhalter stützt sich in diesem Fall an der Scheibe ab und beabstandet dadurch den Scheibenwischer von der Scheibe. Zum Entriegeln muß der Distanzhalter wieder so gedreht werden, daß der Abstand der Scheibenkontaktfläche von der Fixiervorrichtung minimal ist. Diese Einrichtung zum Beabstanden des Scheibenwischers ist nur beim Abstellen des Fahrzeuges einsetzbar. Der Distanzhalter ist von Hand zu betätigen, was die Gefahr in sich birgt, daß bei Inbetriebnahme des Fahrzeuges keine Entriegelung der Scheibenwischer erfolgt. Die noch angehobenen Wischerarme führen wie bei ähnlichen Ausführungen durch die Entlastung der Wischerarme zu einem sogenannten Flattern des Wischerblattes. Es wird zwar vorgeschlagen, den Distanzhalter über Antriebselemente und Regeleinrichtungen zu steuern, dies ist jedoch technisch aufwendig.

Die DE 4202965 C1 beschreibt eine Wischvorrichtung für Glasscheiben von Fahrzeugen, wobei über ein Verstellelement einer Hubvorrichtung der Wischerarm in Parkstellung angehoben wird. Eine Hubvorrichtung mit einem Hubarm kann in einer Parkstellung des Wischers mit einer Angriffsfläche von unten anhebend auf den Wischerarm einwirken. Der Hubarm ist über eine Lagerstelle nach dem Hebelprinzip einsetzbar. Ein Verstellelement mittels pneumatischer Unterdruck-Ansteuerung über Kolben und Feder verschiebt den Hubarm dergestalt, daß der Wischerarm in Parkstellung angehoben bzw. bei Wischeinsatz wieder in Richtung Scheibenebene abgesetzt wird. Diese Vorrichtung ist kompliziert aufgebaut und störanfällig.

Die DE 3346845 A1 schlägt ein verschwenkbares Stützglied zum Abstandhalten eines Scheibenwischers von einer Sichtscheibe vor, wobei in Betriebslage das Stützglied an der Sichtscheibe anliegt und Tragarm und Wischerblattrahmen anhebt. Beim Anlaufen des Scheibenwischers geht das Stützglied mittels Federn aus der Betriebslage in eine Ruhelage über. Die angehobenen Scheibenwischer neigen beim Fahren ebenfalls zum Flattern.

Eine ähnliche Lösung ist in DE 29615696 U1 beschrieben, jedoch mit dem Vorteil, daß nur das Wischerblatt angehoben wird und nicht der gesamte Trägerarm. Ein Befestigungsglied ist an dem Wischerblatt angebracht und über eine Welle ist eine Spannklammer mit Distanzhalter drehbar gelagert. Beim Abstützen des Distanzhalters an der Windschutzscheibe wird das Wischerblatt gegen die Druckkraft des Wischerarmes in Abstand zur Windschutzscheibe gehalten. Auch bei dieser Konstruktion ist eine manuelle Betätigung notwendig.

Aus der DE 19547197 Al ist eine Scheibenwischeranlage zum Wischen einer Glasscheibe bekannt, bei der der Scheibenwischer in einer verschließbaren Öffnung der Karosserie geparkt wird. Unterhalb der waagerechten Kante der Glasscheibe in Höhe der Parkstellung des Scheibenwischers besitzt die Karosserie ein vorspringendes Element, so daß eine

U-förmige, der Größe des Scheibenwischers angepaßte Öffnung entsteht. In Parkstellung verschließt eine gelenkig angeordnete Klappe mittels eines durch den Scheibenwischer betätigten Fingers die Öffnung, so daß der Scheibenwischer geschützt ist. Bei Inbetriebnahme des Scheibenwischers wird die Klappe durch die Antriebskraft des Wischers wieder geöffnet. In Parkstellung besitzt diese Konstruktion zwar eine gute Aerodynamik, jedoch muß die Karosserie hierfür aufwendig umgebaut werden. Da der Scheibenwischer unterhalb der Glasscheibe geparkt wird, müssen Vorkehrungen getroffen werden, um den Scheibenwischer bei Inbetriebnahme wieder schonend auf die Glasscheibe zu setzen.

Darüber hinaus sind an Scheibenwischern angebrachte Luftleiteinrichtungen oder Spoiler bekannt, die den Anpreßdruck des Wischergummis erhöhen oder die Aerodynamik verbessern sollen. So beschäftigt sich die DE 3225919 A1 mit einem strömungsgünstig gestalteten Heck eines Personenkraftwagens. Hierbei ist auf einem Wischerarm auf der der Sichtscheibe abgekehrten Seite eine den Luftwiderstandsbeiwert reduzierende Luftleitvorrichtung aufgesetzt. Der Spoiler besitzt eine aerodynamische Abrißkante. Diese spoilerartigen Anordnungen entlasten nicht das Wischerblatt.

Der Erfindung liegt die Aufgabe zugrunde, eine einfache Wischerblattentlastung für den in Parkstellung weiter von dem Scheibenrand entfernt liegenden Wischer eines Kraftfahrzeuges zu schaffen.

Die Aufgabe wird erfindungsgemäß durch eine Wischerblattentlastung mit den kennzeichnenden Merkmalen des Patentanspruches 1 gelöst. Aus- und Weiterentwicklungen der Erfindung sind in den Unteransprüchen niedergelegt.

Die Erfindung sieht vor, daß der zweite obere Scheibenwischer auf eine Rampe des unteren ersten Scheibenwischers in Parkstellung aufläuft. Damit wird erstmalig ein Scheibenwischer zum Beabstanden des zweiten Scheibenwischers eingesetzt. Die beiden Wischerblätter werden in Reihe angehoben, d.h., zunächst kann das untere Wischerblatt durch die an der Karosserie, auf dem Windlauf oder der Glasscheibe angeordnete Rampe angehoben und dieser Parkstellung folgend hebt sich das obere Wischerblatt mittels der an dem unteren Wischer angesetzten Rampe an. Die in Windrichtung zugekehrten Spoiler der Wischer dienen in Funktionserweiterung gleichzeitig als Gleitschienen für den Auflauf auf die entsprechenden Rampen.

Die Erfindung wird im folgenden an Hand eines Ausführungsbeispiels näher erläutert.

Die zugehörigen Zeichnungen zeigen
- Fig. 1: eine schematische Anordnung der beiden Scheibenwischer
- Fig. 2: einen Querschnitt der Wischerblattentlastung des oberen Scheibenwischers.

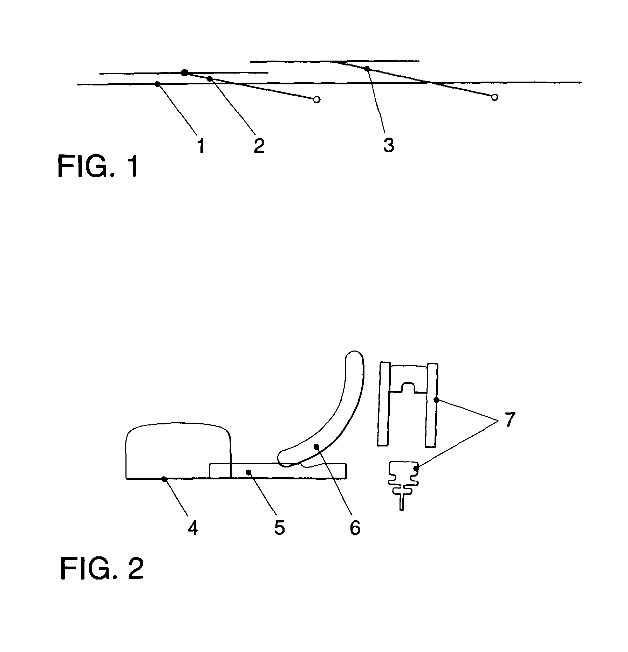

In Fig. 1 sind die beiden Scheibenwischer in Parkstellung aufgezeigt. Der untere Scheibenwischer 2 ist dem Glasscheibenrand 1 zugewandt und hat die Möglichkeit, auf eine am Glasscheibenrand angeordnete Rampe aufzufahren. Der obere Scheibenwischer 3 ist in Parkstellung geringfügig versetzt angeordnet. Am Spannstück 4 des unteren Scheibenwischers 2 ist eine Rampe 5 befestigt, auf die die Gleitschiene 6 des oberen Scheibenwischers 3 in Parkstellung hinaufgleitet und das Wischerblatt 7 anhebt und damit entlastet.

### BEZUGSZEICHENLISTE

- 1: Glasscheibenrand
- 2: unterer Scheibenwischer
- 3: oberer Scheibenwischer
- 4: Spannstück
- 5: Rampe
- 6: Gleitschiene
- 7: Wischerblatt

## Patentansprüche

1. Wischerblattentlastung eines Scheibenwischers für Kraftfahrzeuge unter Verwendung von zwei in Parkstellung versetzt angeordneten Scheibenwischern mit einem oberen und unteren Scheibenwischer **dadurch gekennzeichnet**, daß an der dem oberen Scheibenwischer (3) zugewandten Seite des unteren Scheibenwischers (2) eine Rampe (5) angeordnet ist und der obere Scheibenwischer (3) auf dieser Rampe (5) in Parkstellung aufsitzt.

2. Wischerblattentlastung nach Anspruch 1, **dadurch gekennzeichnet,** daß die Rampe (5) am Spannstück (4) des unteren Scheibenwischers (2) angeordnet ist.

3. Wischerblattentlastung nach den Ansprüchen 1 und 2, **dadurch gekennzeichnet,** daß eine in Windrichtung zugekehrte Gleitschiene (6) des oberen Scheibenwischers (3) auf die Rampe (5) des unteren Scheibenwischers (2) aufläuft.

4. Wischerblattentlastung nach einen der vorhergehenden Ansprüche, **dadurch gekennzeichnet**, daß die Gleitschiene (6) in der Funktion eines Spoilers ausgebildet ist.
